# EUROPÄISCHE PATENTSCHRIFT

(11) **EP 0 698 180 B1**
(45) Veröffentlichungstag und Bekanntmachung des Hinweises auf die Patenterteilung: **02.10.1996**
(21) Anmeldenummer: 94915563.4
(22) Anmeldetag: 29.04.1994
(51) Int. Cl.: F01N 7/10, F01N 3/04

(54) **ABGASLEITUNG**
EXHAUST GAS PIPE
TUYAU DE GAZ D'ECHAPPEMENT

(30) Priorität: 15.05.1993 DE 4316333
(43) Veröffentlichungstag der Anmeldung: 28.02.1996
(73) Patentinhaber: MTU MOTOREN- UND TURBINEN-UNION FRIEDRICHSHAFEN GMBH, D-88040 Friedrichshafen (DE)
(72) Erfinder: OTTENSCHLÄGER, Josef, D-88069 Tettnang (DE)
(86) Internationale Anmeldenummer: EP9401374
(87) Internationale Veröffentlichungsnummer: WO9427036

(56) Entgegenhaltungen:
- EP-A- 0 469 171
- DE-B- 1 158 758
- DE-C- 4 021 326

## Beschreibung

Die Erfindung btrifft eine Abgasleitung, insbesondere für aufgeladene, mehrzylindrige Brennkraftmaschinen, gemäß dem Oberbegriff des ersten Anspruchs.

Abgasleitungen mit einer Kapselung bewirken einen minimalen Wärmeverlust aus dem Abgas und kommen vorzugsweise zum Einsatz, wenn die Energie des Abgases in einem nachgeschalteten Turbolader in Arbeit umgewandelt werden soll, oder wenn die Oberflächentemperatur der Abgasleitung niedrig gehalten werden soll.

Aus der DE- PS 36 35 478 ist eine gekapselte Abgasleitung für eine aufgeladene Brennkraftmaschine bekannt. Eine die Abgase führende innere Leitung ist in einem gasdichten Gehäuse angeordnet. Die innere Leitung ist aus einzelnen Abschnitten zusammengesetzt, wobei die Länge eines Abschnitts etwa dem Zylinderabstand der Brennkraftmaschine entspricht. Die Abschnitte bestehen aus jeweils zwei rinnenförmigen Teilen mit Flanschen. Die Flansche sind am Gehäuse mit Schrauben befestigt. Um Schwingungen der rinnenförmigen Teile zu dämpfen, üben Abdeckstreifen Kraft auf die rinnenförmigen Teile aus.

Die Herstellung der inneren Abschnitte aus zwei Teilen, führt bei deren Bevorratung und Montage zu erhöhten Kosten. Die Montage der Abgasleitung mit Abdeckstreifen erfordert sorgfältige Anpassung und ist daher kostenintensiv.

Aufgabe der vorliegenden Erfindung ist es, eine Abgasleitung zu schaffen, die kostengünstig, schwingungsgedämpft und einfach montierbar ist.

Die Lösung der Aufgabe erfolgt mit einer Abgasleitung mit den Merkmalen des Anspruchs 1. Vorteilhafte Ausgestaltungen der Erfindung sind in den Unteransprüchen beansprucht.

Die innenliegenden Heißgasleitung ist aus mehreren einteiligen Segmenten aus Fein- oder Normalguß besonders kostengünstig herzustellen. Ohne zusätzliche Kosten können die Segmente bei der Herstellung bereits mit Vorsprüngen zur Aufnahme der Schraubenlöcher versehen werden. Die kostenintensive, getrennte Lagerhaltung von unterschiedlichen Bauteilen entfällt. Bei der Montage der Segmente an das äußere Gehäuse der Abgasleitung müssen nicht getrennte Bauteile an unter Umständen schwer zugänglichen Orten aneinander angepaßt werden, sondern die Montage ist mit einem Segment, das von außen mittels Schrauben befestigbar ist, stark vereinfacht. Der Ausgleich von Wärmespannungen im Betrieb der Abgasleitung zwischen Bauteilen der inneren Heißgasleitung entfällt. Die Abstützung der Segmente erfolgt an den Vorsprüngen, so daß Schwingungen weitgehend unterdrückt werden.

Vorzugsweise sind die Segmente mit jeweils zwei in Quer- oder Längsrichtung nebeneinanderliegenden Schrauben an dem äußeren Gehäuse befestigt. Dies ist eine besonders kostengünstige Methode, die Segmente verdrehsicher mit dem äußeren Gehäuse zu verbinden.

Gemäß einer weiteren vorteilhaften Ausgestaltung der vorliegenden Erfindung sind die Segmente jeweils gegenüber den Gaseintrittsöffnungen von der Brennkraftmaschine in die Abgasleitung mit dem äußeren Gehäuse verschraubt. Dadurch, daß die Gasimpulse von der Brennkraftmaschine direkt auf die Verschraubung der Segmente mit dem äußeren Gehäuse gerichtet sind, wird das Segment insgesamt wenig zur Schwingung angeregt, und eine zusätzliche Vorrichtung zur Schwingungsdämpfung er übrigt sich.

Eine besonders strömungsgünstige und in sich stabile Form der innenliegenden Heißgasleitung wird mit rohrförmigen Segmenten mit einem runden oder ovalen Querschnitt erzielt.

Vorzugsweise wird das äußere Gehäuse mit einer Wasserkühlung versehen, um die Oberflächentemperatur der Abgasleitung niedrig zu halten.

Die Erfindung wird im folgenden anhand von Ausführungsbeispielen im einzelnen erläutert. Es zeigen:
- Fig. 1: einen Querschnitt durch eine erfindungsgemäße Abgasleitung in Längsrichtung,

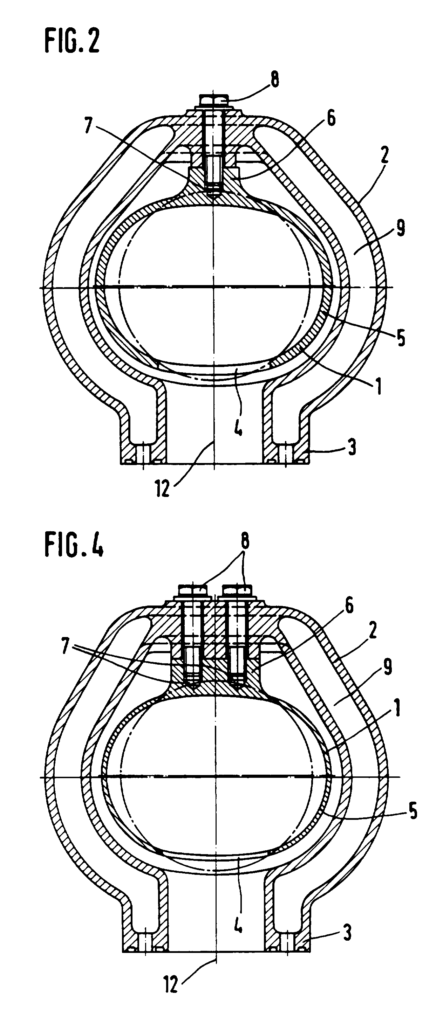

- Fig. 2: einen Querschnitt senkrecht zur Längsachse der Abgasleitung gemäß Fig. 1
- Fig. 3, 4: eine erfindungsgemäße Abgasleitung mit einer vorteilhaft ausgestalteten Befestigung.

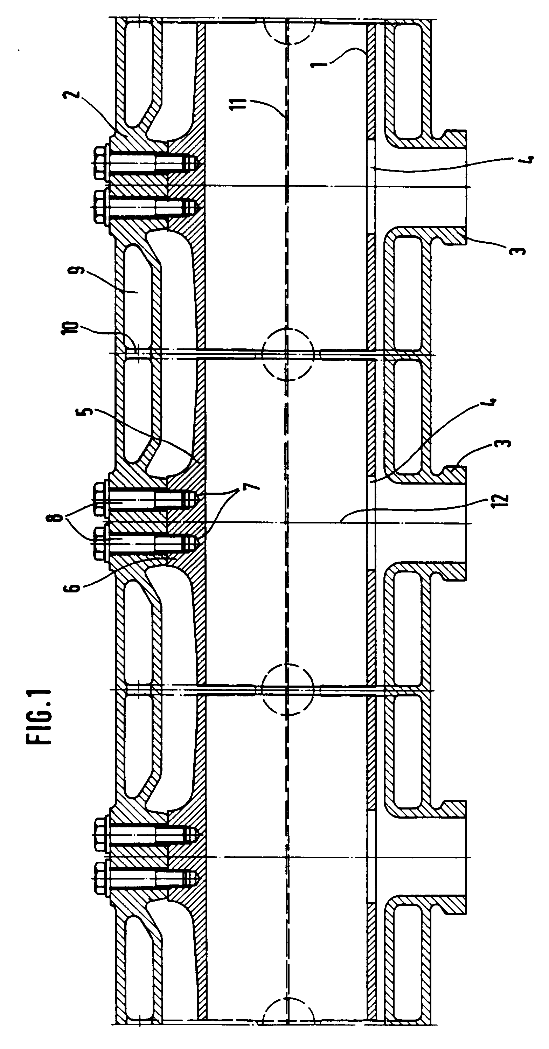

Fig. 1 zeigt eine erfindungsgemäße Abgasleitung angepaßt an eine dreizylindrige Brennkraftmaschine (nicht dargestellt). Durch Aneinanderreihen einer entsprechenden Anzahl derartiger Abgasleitungen kann deren Länge entsprechend der Anzahl der Zylinder der Brennkraftmaschine verändert werden.

Die Abgase aus den Zylindern werden von einer inneren Heißgasleitung 1 aufgenommen, die an einem gasdichten, flüssigkeitsgekühlten, äußeren Gehäuse 2 befestigt ist.

Das äußere Gehäuse 2 weist Abgasstutzen 3 auf, die auf entsprechende Einlaßöffnungen 4 der inneren Heißgasleitung 1 gerichtet aber nicht mit ihnen verbunden sind. Die innere Heißgasleitung 1 ist aus einzelnen gleichförmigen Segmenten 5 zusammengesetzt. Jedes Segment 5 ist rohrförmig und hat einen im wesentlichen kreisförmigen oder ovalen Querschnitt. Die Länge der Segmente 5 ist ungefähr gleich dem Zylinderabstand der Brennkraftmaschine. Die Einlaßöffnung 4 ist in der Mitte der axialen Erstreckung jedes Segments 5 angeordnet. Gegenüber der Einlaßöffnung 4 weist das Segment 5 einen angegossenen Vorsprung 6 auf. Im Vorsprung 6 sind Schraubenlöcher 7 zur Aufnahme von Schrauben 8 vorgesehen. Am Vorsprung 6 liegen die Segmente 5 auf dem Innenumfang des Gehäuses 2 derart an, daß die Wärmeübertragung zum Gehäuse 2 gering ist. Zwei Schrauben 8 sind zur verdrehsicheren und schwingungsdämpfenden Befestigung der Segmente 5 von außen durch Gehäuse 2 jeweils in Richtung der Längsachse 11 der Abgasleitung, symmetrisch zu den Achsen 12 der Abgasstutzen 3, in kurzem Abstand in jeden der Vorsprünge 6 geschraubt.

Das äußere Gehäuse 2 der Abgasleitung enthält Hohlräume 9 zur Aufnahme von Kühlflüssigkeit. Die Kühlflüssigkeit der Brennkraftmaschine kann ohne Zwischenleitungen auch in dem äußeren Gehäuse 2 zirkulieren. Die Hohlräume 9 können zur Versteifung mit Zwischenwänden 10 ausgestattet sein.

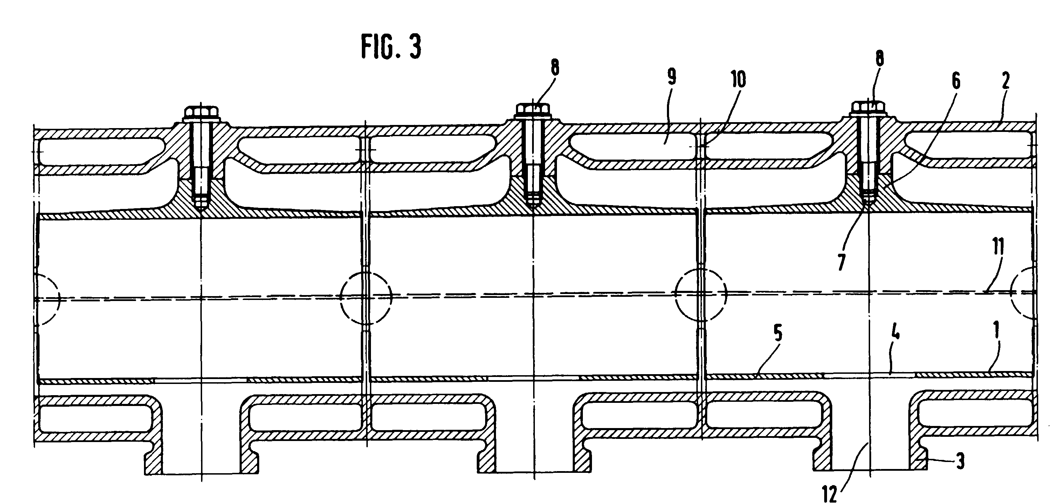

Gemäß Fig. 3 und Fig. 4 sind die Schrauben 8 zur verdrehsicheren Befestigung der Segmente 5 der inneren Heißgasleitung 1 an dem äußeren Gehäuse 2 in einer Ebene senkrecht zur Längsachse 11 der Abgasleitung durch die Achsen 12 der Abgasstutzen 3 in kurzem Abstand nebeneinander in jedem der Vorsprünge 6 symmetrisch zur Achse 12 angeordnet.

## Patentansprüche

1. Abgasleitung für mehrzylindrige, aufgeladene Brennkraftmaschine mit einem äußeren gasdichten Gehäuse (2), und einer innenliegenden Heißgasleitung (1) aus als einteilige Gußteile ausgebildeten Segmenten (5), deren Länge den Zylinderabständen der Brennkraftmaschine entspricht, dadurch gekennzeichnet, daß die Segmente (5) gegenüber der Einlaßöffnung (4) am Außenumfang angeordnete Vorsprünge (6) aufweisen, die an am Innenumfang vorgesehenen Vorsprüngen des Gehäuses (2) anliegen und an dieser Stelle mittels von außen zugänglicher Schrauben befestigt sind.

2. Abgasleitung gemäß Anspruch 1, dadurch gekennzeichnet, daß die Vorsprünge (6) jeweils zwei in Richtung der Längsachse (11) oder senkrecht zur Längsachse (11) nebeneinanderliegende Schrauben (8) aufnehmen können.

3. Abgasleitung gemäß Anspruch 1 oder 2, dadurch gekennzeichnet, daß die Schrauben (8) gegenüber der Einlaßöffnung (4) angeordnet sind.

4. Abgasleitung gemäß Anspruch 1 bis 3, dadurch gekennzeichnet, daß die Segmente (5) rohrförmig sind und runden oder ovalen Querschnitt haben.

5. Abgasleitung gemäß Anspruch 1 bis 4, dadurch gekennzeichnet, daß das äußere Gehäuse (2) wassergekühlt ist.

## Claims

1. An exhaust duct for multicylinder, forced-induction internal-combustion engines, with an outer gas-tight housing (2), and an inner hot gas duct (1) comprising segments (5) which are in the form of one-piece cast parts and the length of which corresponds to the cylinder spacings of the internal-combustion engine, characterised in that the segments (5) have projections (6) arranged opposite the inlet opening (4) on the outer circumference, which adjoin projections provided on the inner circumference of the housing (2), and are fastened at this location by means of externally accessible screws.

2. An exhaust duct according to Claim 1, characterised in that the projections (6) can each accommodate two screws (8) situated side by side in the direction of the longitudinal axis (11) or perpendicularly to the longitudinal axis (11).

3. An exhaust duct according to Claim 1 or 2, characterised in that the screws (8) are arranged opposite the inlet opening (4).

4. An exhaust duct according to Claims 1 to 3, characterised in that the segments (5) are tubular and are of circular or oval cross-section.

5. An exhaust duct according to Claims 1 to 4, characterised in that the outer housing (2) is water-cooled.

## Revendications

1. Collecteur d'échappement pour moteur à combustion interne multicylindre, suralimenté, comportant un carter extérieur (2) étanche aux gaz et une conduite de gaz chauds (1) située à l'intérieur et constituée de segments (5) qui sont conçus en tant que pièces de fonte monoblocs dont la longueur correspond aux entraxes des cylindres du moteur à combustion interne, caractérisé par le fait que les segments (5) présentent des bossages (6) qui sont disposés à la périphérie extérieure, en face de l'ouverture d'entrée (4), qui s'appuient contre des bossages du carter (2) prévus à la périphérie extérieure et qui sont fixés à cet endroit au moyen de vis accessibles de l'extérieur.

2. Collecteur d'échappement selon la revendication 1, caractérisé par le fait que les bossages (6) peuvent recevoir chacun deux vis (8) situées l'une à côté de l'autre selon la direction de l'axe longitudinal (11) ou perpendiculairement à l'axe longitudinal (11).

3. Collecteur d'échappement selon la revendication 1 ou 2, caractérisé par le fait que les vis (8) sont disposées en face de l'ouverture d'entrée (4).

4. Collecteur d'échappement selon les revendications 1 à 3, caractérisé par le fait que les segments (5) sont de forme tubulaire et ont une section ronde ou ovale.

5. Collecteur de gaz d'échappement selon la revendication 1 à 4, caractérisé par le fait que le carter extérieur (2) est refroidi à l'eau.
